# EUROPÄISCHE PATENTSCHRIFT

(11) **EP 0 487 972 B1**
(45) Veröffentlichungstag und Bekanntmachung des Hinweises auf die Patenterteilung: **11.05.1994**
(21) Anmeldenummer: 91119304.3
(22) Anmeldetag: 13.11.1991
(51) Int. Cl.: F16F 7/10, G05G 25/02

(54) **Schwingungs-Tilger**
Vibration absorber
Amortisseur d'oscillations

(30) Priorität: 28.11.1990 DE 4037786
(43) Veröffentlichungstag der Anmeldung: 03.06.1992
(73) Patentinhaber: DIEHL GMBH & CO., 90478 Nürnberg (DE)
(72) Erfinder: Pepping, Karl-Heinz, Dipl.-Ing., W-5372 Schleiden (DE); Hausmann, Hubert, W-5353 Mechernich (DE); Engel, Michael, W-5541 Neuendorf (DE); Gebhardt, Günther, W-5536 Stadtkyll (DE)

(56) Entgegenhaltungen:
- EP-A- 0 072 465
- DE-A- 2 658 019
- DE-A- 2 855 024
- US-A- 4 528 863

## Beschreibung

Die Erfindung bezieht sich auf einen Schwingungs-Tilger für ein Betätigungselement eines Aggregates, wie Kraftfahrzeugkupplung.

Schwingungs-Tilger dienen zur Tilgung von störenden Aggregat-Schwingungen. Die Tilgung erfolgt über ein Gewicht in Verbindung mit einem Gummielement, entsprechend einem Feder-Masse-System.

Aus der DE-OS 29 30 674 ist es bei einer Ausrückvorrichtung einer Fahrzeugkupplung bekannt, das Spiel zwischen den Armen eines Betätigungshebels und einer Schiebehülse eines axial verschiebbaren Kupplungsausrücklagers durch ein separates Dämpfungselement zu beseitigen. Hierzu kann das Dämpfungselement als elastisch nachgiebige Formfeder aus Metall oder aus Kunststoff bestehen. Eine derartige Formfeder dient nicht zur Tilgung, sondern zur Dämpfung von ansonsten hörbaren Kupplungsgeräuschen und starken Vibrationen am Kupplungspedal. Diese beiden Effekte stellen einen großen Fahrkomfortverlust dar.

Der Erfindung liegt die Aufgabe zugrunde einen Schwingungs-Tilger für ein, über ein Betätigungselement, wie Drahtseil, Gestänge betätigbares Aggregat, wie Kraftfahrzeugkupplung vorzuschlagen, das die hörbaren Kupplungsgeräusche und starken Vibrationen an einem Betätigungselement mindert, oder ganz beseitigt.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Mit der Erfindung wird eine vollkommene Isolation von Kupplungshebel zum Kupplungszug durch die Gummifeder erreicht. Isolationskurzschlüsse werden während der Kupplungsbetätigung vermieden. Eine Isolation der Schwingungen liegt auch im nicht betätigten Zustand durch die zwei gegeneinander vorgespannten Gummielemente vor. Die störenden Vibrationen und Geräusche sind durch das erfindungsgemäße Feder-Masse-System vollständig beseitigt.

Die Funktionssicherheit des erfindungsgemäßen Schwingungs-Tilgers ist gegeben, da dieser ausschließlich auf Druck beansprucht wird. Federn diese Art sind, solange sie nicht überlastet werden, hinsichtlich ihrer Lebensdauer vollkommen unkritisch. Selbst bei Anrissen im Gummi ist die Funktion des Kuppelns nicht beeinträchtigt, höchstens der Komfort.

Die schwimmende Lagerung des Kupplungshebels innerhalb des Käfigs ergibt einerseits eine gute Isolation und gewährleistet andererseits die Integration des Schwingungs-Tilgers auf kleinstem Bauraum.

Nach dem Anspruch 2 ist das Gewicht raumsparend an dem Käfig angeordnet.

Die Dämpfungseigenschaften der Gummielemente sind nach dem Anspruch 3 durch den Käfig nicht beeinflußt.

Einfach herstellbare Verbindungen ergeben sich für den Kupplungshebel mit den Gummielementen aus den Ansprüchen 4 bis 6.

Eine gute Zentrierung der Gummielemente in dem Käfig ist nach dem Anspruch 7 ermöglicht.

Optimierte Höhen der Gummielemente sind im Anspruch 8 angegeben.

Ausführungsbeispiele der Erfindung sind in den Zeichnungen dargestellt. Es zeigen
- Figur 1: einen Schwingungs-Tilger im Querschnitt,
- Figur 2: den Schwingungs-Tilger nach Figur 1 in einer Seitenansicht,
- Figur 3: einen weiteren Schwingungs-Tilger und
- Figur 4: den Schwingungs-Tilger nach Figur 3 im Schnitt IV-IV.

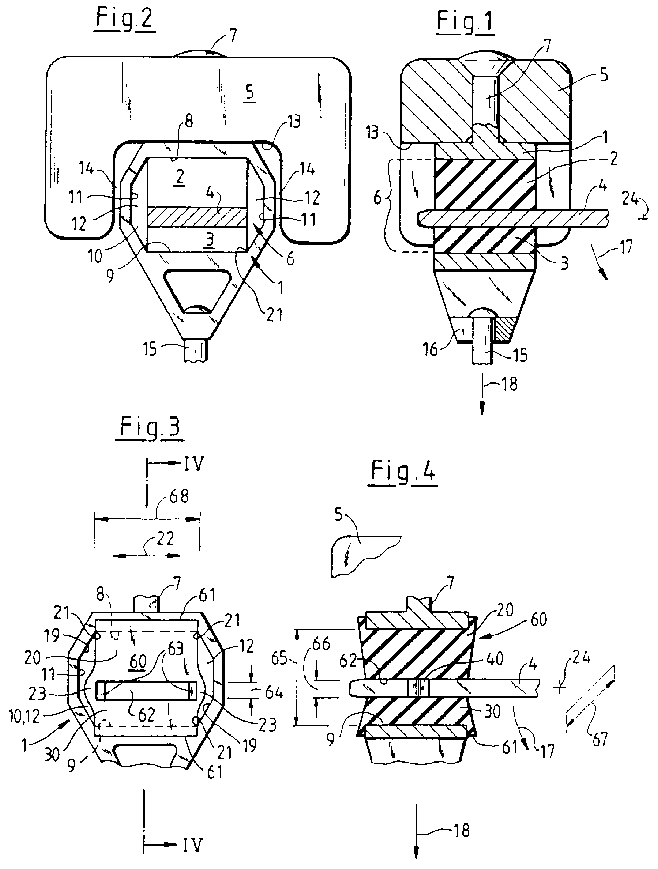

Nach den Figuren 1 und 2 weist ein Käfig 1 zwei vorgespannte Gummielemente 2, 3 einer mit 6 bezeichneten Gummifeder auf. Mit dem Käfig ist über ein nietartiges Element 7 ein Gewicht 5 verbunden. Ein über einem Drehpunkt 24 schwenkbarer Kupplungshebel 4 ist mit den Gummielementen 2, 3 durch Vulkanisation fest verbunden. Ebenso ist das Gummielement 2 an einer oberen Fläche 8 des Käfigs 1 anvulkanisiert, während es an einer unteren Fläche 9 nur unter Vorspannung anliegt. Beide Gummielemente 2, 3 sind in dem gezeichneten Einbauzustand vorgespannt.

Der Kupplungshebel 4 und das Gewicht 5 bestehen aus Stahl. Der Käfig 1 besteht aus Aluminium.

Die Gummifedern 2, 3 sind quaderförmig ausgebildet und in einer Öffnung 10 des Käfig 1 zusammen mit dem Hebel 4 so angeordnet, daß die Gummifeder 6 und der Hebel 4 zu den Seitenwänden 11 jeweils ein freier Abstand 12 besteht.

Das Gewicht 5 ist U-förmig ausgebildet und nimmt in einer Ausnehmung 13 mit seitlichen Abständen 14 den Käfig 1 auf.

Ein Drahtseil 15 ist in einem Schlitz 16 des Käfigs 1 formschlüssig befestigt.

### Funktionsbeschreibung

Durch die vorgespannten Gummielemente 2, 3 befindet sich der Hebel 4 in einem Kraftgleichgewichtszustand.

Wird ein nicht dargestelltes Kupplungspedal betätigt, um den Hebel 4 über ein nicht dargestelltes Lager in Pfeilrichtung 17 zu bewegen, so wird aufgrund der Seilzugrichtung 18 das Gummielement 2 über einen verhältnismäßig langen Federweg komprimiert, jedoch das Gummielement 3 entlastet.

Die Entlastung des Gummielementes 3 erfolgt soweit, wie dieses vorgespannt war.

Danach hebt das Gummielement 3 eventuell von der Fläche 9 ab. Eine nicht dargestellte Kennlinie des Federelementes 3 erfährt dadurch einen Knick und geht in eine neue für die Abstimmung bzw. Funktion des Tilgers erforderliche weichere Kennlinie über. Wann sich der Hebel in Bewegung setzt, hängt von der Gegenkraft der Kupplung ab.

Durch das erfindungsgemäße vorgespannte System wird erreicht, daß auch Schwingungen, die bei nicht betätigten Kupplungspedal im Bereich der Kennlinie der Federelemente 2, 3 auftreten, getilgt, d. h. vollständig beseitigt werden.

Nach den Figuren 3, 4 ist in den Käfig 1 eine einstückige Gummifeder 60 eingesetzt und durch Rippen 61 formschlüssig gehalten. Das Element 7 dient entsprechend der Figur 1 zur Befestigung des Gewichts 5.

Eine durchgehende Öffnung 62 mit zwei einander gegenüberliegenden Nocken 63 weist eine Höhe 64 auf, die bei einer Höhe 65 von 30 Millimeter der Gummifeder 60 1,5 Millimeter kleiner ist als eine Höhe 66 des Kupplungshebels 4.

Eine Breite 67 des Kupplungshebels 4 entspricht einer Breite 68 der Öffnung 62.

Entsprechend den Nocken 63 sind am Kupplungshebel 4 Ausnehmungen 40 vorgesehen.

Schräge Seitenwände 19 des Käfigs 1 bilden mit den planen Auflageflächen 8, 9 Stoßkanten 21. Diese Stoßkanten 21 fixieren formschlüssig die Gummifeder 60 in der Pfeilrichtung 22.

Beim Einpressen des Kupplungshebels 4 in die Öffnung 62 schnappen die Nocken 63 in seine Ausnehmungen 40 ein und es erhält die Gummifeder 60 ihre Vorspannung in dem Käfig 1. Es liegt dann ein Form- und Kraftschluß sowohl für den Kupplungshebel 4 als auch für die Gummifeder 60 in dem Käfig 1 vor. Damit erhalten auch die Gummielemente 20, 30 der Gummifeder 60 ihre Vorspannung. Die Gummielemente 20, 30 sind über Stege 23 miteinander verbunden.

Die einstückige Gummifeder 60 mit ihrer Montagefreundlichkeit stellt auch in Bezug auf den Kupplungshebel 4 einen erheblichen Kostenvorteil dar.

Überraschend ist hierbei, daß die unterschiedlich notwendigen Federwege der Gummielemente 20, 30 in einfacher Weise durch die Unterteilung der Höhe 65 der Gummifeder 60 in ein Drittel und in zwei Drittel der genannten Höhe erreicht ist.

Die Gummifedern 2, 20 sind aufgrund der Bauhöhe ca. viermal weicher als die Gummifedern 3, 30.

Erfindungswesentlich ist, daß die Vorspannung der eigentlichen Funktionsfeder 2, 20 gegen eine härtere Feder 3, 30 erfolgt. Dies hat zwar den Nachteil, daß man gegenüber einem gegen einen starren Körper vorgespannten System einen zusätzlichen Wegverlust der Feder 3, 30 in Kauf nehmen muß, hat jedoch den Vorteil, daß das System selbst bei Nichtbetätigung der Kupplung vollständig isoliert und als Tilger wirkt.

Beim Treten eines nicht dargestellten Kupplungspedals wird der Käfig 1 in Richtung 18 gezogen. Das weichere Gummielement 2 bzw. 20 wird dadurch komprimiert und das härtere Gummielement 3 bzw. 30 dekomprimiert, d. h. es verliert seine Vorspannung.

Sobald die Federelemente 3, 30 von der Käfigwandung 9 abheben, erfährt die Federkennlinie einen Knick.

Dann erfolgt anschließend die Komprimierung des weicheren Gummielementes 2 bzw. 20 mit einem wesentlich größeren Federweg als im Anfangsbereich. Erst in diesem Einfederungsbereich sind die Federkräfte der Federn 2, 20 so groß, daß eine Schwenkung des Kupplungshebels 4 in Richtung 17 erfolgt, wodurch die nicht dargestellten Kupplungsbeläge voneinander abheben.

Beim Schließen der Kupplung wirken ihre nicht dargestellten Schließfedern entgegen der Richtung 17, wobei die Beanspruchung der Gummielemente 20, 30 in umgekehrter Reihenfolge erfolgt.

Durch die Kombination der weicheren Gummielemente 2, 20 mit den härteren Gummielementen 3, 30 wird einerseits ein verhältnismäßig kurzer Gesamtfederweg erreicht, wobei aber die beim Kuppeln notwendige Eigenfrequenz des Tilgers ausschließlich über die Federsteifigkeit der weichen Feder 2, 20 erzielt wird, andererseits werden Motorschwingungen bei nicht betätigtem Kupplungspedal isoliert und getilgt, so daß das Kupplungspedal vollkommen ruhig ist.

## Patentansprüche

1. Schwingungs-Tilger für ein Betätigungselement eines Aggregats, wie Kraftfahrzeugkupplung,
dadurch gekennzeichnet,
daß ein Übertragungselement zwischen einem Drahtseil (15) oder einem Gestänge und einem Hebel (4) des Aggregats als Käfig (1) ausgebildet ist,
in dem Käfig (1) der Hebel (4) über eine vorgespannte, zweiteilige Gummifeder (6, 60) schwimmend gelagert ist,
der Hebel (4) mit der Gummifeder (6, 60) fest verbunden ist,
und an dem Käfig (1) ein Gewicht (5) befestigt ist.

2. Schwingungs-Tilger nach Anspruch 1,
dadurch gekennzeichnet,
daß das Gewicht (5) U-förmig ausgebildet ist und den Käfig (1) wenigstens zum Teil umgibt.

3. Schwingungs-Tilger nach Anspruch 1,
dadurch gekennzeichnet,
daß in den seitlichen Bereichen des Hebels (4) jeweils ein freier Abstand (12) zum Käfig (1) besteht.

4. Schwingungs-Tilger nach Anspruch 1,
dadurch gekennzeichnet,
daß der Hebel (4) mit der Gummifeder (6) durch Vulkanisation verbunden ist.

5. Schwingungs-Tilger nach Anspruch 1,
dadurch gekennzeichnet,
daß die Gummifeder (60) mit dem Hebel (4) form- und kraftschlüssig verbunden ist.

6. Schwingungs-Tilger nach Anspruch 1,
dadurch gekennzeichnet,
daß die Gummifeder (60) formschlüssig und unter Vorspannung in dem Käfig (1) sitzt
und für den Hebel (4) eine aufweitbare, die Vorspannung erzeugbare Durchstecköffnung (62) in der Gummifeder (60) vorgesehen ist, wobei der Hebel (4) zur formschlüssigen Fixierung in der Gummifeder (60) mit seitlichen Ausnehmungen (40) versehen ist und die Gummifeder (60) einschnappbare Nocken (63) aufweist.

7. Schwingungs-Tilger nach Anspruch 1,
dadurch gekennzeichnet,
daß der Käfig (1) in der Achse des Seilzuges (18) plane Auflageflächen (8, 9) für den Gummiblock (6, 60) aufweist und seitlich dazu schräge Seitenwände (19) aufweist, die den Gummiblock (6, 60) auf den planen Auflageflächen (8, 9) fixieren.

8. Schwingungs-Tilger nach Anspruch 1,
dadurch gekennzeichnet,
daß die Höhen der Gummielemente (2 bzw. 20 und 3 bzw. 30) sich etwa wie 2:1 verhalten.

## Claims

1. A vibration eradicator for an actuation component of a unit, such as a motor-vehicle clutch, characterised in that a transmission component between a wire rope (15) or a linkage and a lever (4) of the unit is designed as a cage (10), the lever is mounted in the cage (10) in floating manner by way of a prestressed two-part rubber spring (6, 60), the lever (4) is connected securely to the rubber spring (6, 60), and a weight (5) is fastened to the cage (1).

2. A vibration eradicator according to claim 1, characterised in that the weight (5) is U-shaped in design and at least partly surrounds the cage (1).

3. A vibration eradicator according to claim 1, characterised in that in the lateral regions of the lever (4) in each case a free spacing (12) with regard to the cage (10) exists.

4. A vibration eradicator according to claim 1, characterised in that the lever (4) is connected to the rubber spring (6) by vulcanisation.

5. A vibration eradicator according to claim 1, characterised in that the rubber spring (60) is connected to the lever (4) in a form- and force-locking manner.

6. A vibration eradicator according to claim 1, characterised in that the rubber spring (60) is seated in a form-locking manner and under prestress in the cage (1) and for the lever (4) an expansible plug-through aperture (62) which can generates the prestress provided in the rubber spring (60), the lever (4) for the form-locking fixing in the rubber spring (60) having dogs (63) which can be snapped home.

7. A vibration eradicator according to claim 1, characterised in that the cage (1) in the axis of the cable pull (18) has flat bearing surfaces (8, 9) for the rubber block (6, 60) and has laterally thereto inclined side walls (19) which fix the rubber block (6, 60) on the flat bearing surfaces (8, 9).

8. A vibration eradicator according to claim 1, characterised in that the heights of the rubber components (2 or respectively 20 and 3 or respectively 30) are approximately 2 : 1.

## Revendications

1. Amortisseur d'oscillations pour un élément d'actionnement d'un groupe, tel qu'un embrayage de véhicule, caractérisé en ce qu'un élément de transmission, prévu entre un câble métallique (15) ou une tringlerie et un levier (4) du groupe, est conçu à la manière d'une cage (1),
dans la cage (1) le levier (4) est monté flottant par un ressort en caoutchouc (6, 60) en deux parties, précontraint,
le levier (4) est solidaire du ressort en caoutchouc (6, 60)
et sur la cage (1) est fixé un poids (5).

2. Amortisseur d'oscillations selon la revendication 1, caractérisé en ce que le poids (5) est en U et entoure au moins partiellement la cage (1).

3. Amortisseur d'oscillations selon la revendication 1, caractérisé en ce que dans les zones latérales du levier (4) il existe toujours un écartement (12) libre par rapport à la cage (1).

4. Amortisseur d'oscillations selon la revendication 1, caractérisé en ce que le levier (4) est assemblé au ressort en caoutchouc (6) par vulcanisation.

5. Amortisseur d'oscillations selon la revendication 1, caractérisé en ce que le ressort en caoutchouc (60) est assemblé avec le levier (4) par concordance de forme et par force.

6. Amortisseur d'oscillations selon la revendication 1, caractérisé en ce que le ressort en caoutchouc (60) est ajusté par concordance de forme et sous précontrainte dans la cage (1) et pour le levier (4) il est prévu dans le ressort en caoutchouc (60), une ouverture d'introduction (62) élargissable, produisant la précontrainte, le levier (4) étant pourvu pour la fixation par concordance de forme dans le ressort en caoutchouc (60), d'évidements (40) latéraux et le ressort en caoutchouc (60) présentant des cames (63) encliquetables.

7. Amortisseur d'oscillations selon la revendication 1, caractérisé en ce que la cage (1) présente dans l'axe du câble (18) des surfaces d'application (8, 9) planes pour le bloc caoutchouc (6, 60) et sur le côté de celles-ci, des parois latérales (19) obliques qui fixent le bloc caoutchouc (6, 60) sur les surfaces d'application (8, 9) planes.

8. Amortisseur d'oscillations selon la revendication 1, caractérisé en ce que les hauteurs des éléments en caoutchouc (2 ou 20 et 3 ou 30) sont dans un rapport de 2 à 1.
